(19) Europäisches Patentamt
European Patent Office
Office européen des brevets

(11) **EP 4 787 462 A1**

(12) **EUROPEAN PATENT APPLICATION**
published in accordance with Art. 153(4) EPC

(43) Date of publication:
05.08.2026 Bulletin 2026/32

(21) Application number: 24872436.1

(22) Date of filing: 26.09.2024

(51) International Patent Classification (IPC):
H01M 4/139 (2010.01)    H01M 4/13 (2010.01)
H01M 4/62 (2006.01)    H01M 10/052 (2010.01)
H01M 10/0566 (2010.01)

(52) Cooperative Patent Classification (CPC):
H01M 4/13; H01M 4/139; H01M 4/62;
H01M 10/052; H01M 10/0566; Y02E 60/10

(86) International application number:
PCT/JP2024/034512

(87) International publication number:
WO 2025/070652 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023170850

(71) Applicant: Zeon Corporation
Tokyo 100-8246 (JP)

(72) Inventors:
• YAMADA Atsushi
Tokyo 100-8246 (JP)
• OSHIMA Hiroki
Tokyo 100-8246 (JP)

(74) Representative: Maiwald GmbH
Elisenhof
Elisenstraße 3
80335 München (DE)

(54) **BINDER COMPOSITION FOR NONAQUEOUS SECONDARY BATTERY ELECTRODES, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(57) Provided is a binder composition for a non-aqueous secondary battery electrode that is capable of forming an electrode for a non-aqueous secondary battery having excellent peel strength. The binder composition for a non-aqueous secondary battery electrode contains a particulate binder and water. In a situation in which an elastic modulus in a cross-section of a binder film produced using the binder composition for a non-aqueous secondary battery electrode is measured using an atomic force microscope, a proportion constituted by a low elasticity region where the elastic modulus is less than 10 MPa is not less than 10% and not more than 86%.

EP 4 787 462 A1

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a secondary battery, such as a lithium ion secondary battery, generally includes a current collector and an electrode mixed material layer formed on the current collector. The electrode mixed material layer is formed, for example, by applying a slurry composition onto the current collector and then drying the slurry composition. The slurry composition contains a dispersion medium and, dispersed therein, an electrode active material, a binder composition containing a binder, and so forth.

In recent years, there have been attempts to improve binder compositions used in the formation of electrode mixed material layers in order to further improve secondary battery performance.

Patent Literature (PTL) 1 to 4 describe the use of a particulate polymer including monomer units such as an aromatic vinyl monomer unit, an aliphatic conjugated diene monomer unit, and a carboxyl group-containing monomer unit, for example, as a binder contained in a binder composition.

CITATION LIST

Patent Literature

PTL 1: JP6645430B2
PTL 2: JP6627763B2
PTL 3: JP5701519B2
PTL 4: WO2010/114119A1

SUMMARY

(Technical Problem)

When an electrode is produced by forming an electrode mixed material layer from a slurry composition that contains a binder composition, it is desirable to ensure a high level of close adherence between the electrode mixed material layer and a current collector (i.e., peel strength of the electrode).

However, the conventional binder compositions described above leave room for further improvement in terms of increasing peel strength of an electrode.

Accordingly, one object of the present disclosure is to provide a binder composition for a non-aqueous secondary battery electrode that is capable of forming an electrode for a non-aqueous secondary battery having excellent peel strength and a slurry composition for a non-aqueous secondary battery electrode that contains this binder composition.

Another object of the present disclosure is to provide an electrode for a non-aqueous secondary battery that has excellent peel strength and a non-aqueous secondary battery that includes this electrode for a non-aqueous secondary battery.

(Solution to Problem)

The inventors conducted diligent investigation with the aim of solving the problem set forth above. The inventors focused on the elastic modulus in a cross-section of a binder film that has been formed using a binder composition. The inventors found that by using a binder composition that contains a particulate binder and water and with which the proportion constituted by a low elasticity region in a cross-section of a binder film is within a specific range, it is possible to form an electrode having excellent peel strength, and, in this manner, the inventors completed the present disclosure.

Specifically, the present disclosure aims to advantageously solve the problem set forth above, and, according to the present disclosure, binder compositions for a non-aqueous secondary battery electrode according to the following {1} to {8}, a slurry composition for a non-aqueous secondary battery electrode according to the following {9}, an electrode for a non-aqueous secondary battery according to the following {10}, and a non-aqueous secondary battery according to the following {11} are provided.

{1} A binder composition for a non-aqueous secondary battery electrode comprising a particulate binder and water, wherein in a situation in which an elastic modulus in a cross-section of a binder film produced using the binder composition for a non-aqueous secondary battery electrode is measured using an atomic force microscope, a proportion constituted by a low elasticity region where the elastic modulus is less than 10 MPa is not less than 10% and not more than 86%.

Through a binder composition that contains a particulate binder and water and with which the proportion constituted by a low elasticity region in a cross-section of a binder film is within the range set forth above, it is possible to cause an electrode to display excellent peel strength.

Note that the "elastic modulus" in a cross-section of a binder film referred to in the present disclosure is measured using an atomic force microscope (AFM) and, more specifically, can be measured by a method described in the EXAMPLES section of the present specification.

Moreover, the terms "low elasticity region" and "high elasticity region" as used in the present disclosure respectively refer to "a region where the elastic modulus is less than 10 MPa" and "a region where the elastic modulus is 10 MPa or more". Also, the "proportion constituted by a low elasticity region" and the "proportion constituted by a high elasticity region" can be determined by a method described in the EXAMPLES section of the present specification.

{2} The binder composition for a non-aqueous secondary battery electrode according to the foregoing {1}, wherein the elastic modulus has a standard deviation of not less than 5.0 and not more than 20.0.

When the standard deviation of the elastic modulus of the cross-section of the binder film is within the range set forth above, peel strength of an electrode can be further improved, and internal resistance of a secondary battery can be reduced.

Note that the "standard deviation" of the elastic modulus referred to in the present disclosure can be determined by a method described in the EXAMPLES section of the present specification.

{3} The binder composition for a non-aqueous secondary battery electrode according to the foregoing {1} or {2}, wherein the elastic modulus has a 90th percentile value of not less than 20 MPa and not more than 100 MPa.

When the 90th percentile value of the elastic modulus of the cross-section of the binder film is within the range set forth above, peel strength of an electrode can be further improved, and internal resistance of a secondary battery can be reduced. Moreover, tackiness of the binder composition can be improved.

Note that the "90th percentile value" of the elastic modulus referred to in the present disclosure can be determined by a method described in the EXAMPLES section of the present specification.

{4} The binder composition for a non-aqueous secondary battery electrode according to any one of the foregoing {1} to {3}, wherein a ratio Da/Db of an average particle diameter Da of the particulate binder measured by dynamic light scattering and an average particle diameter Db of the particulate binder measured by laser diffraction/scattering is not less than 1.05 and not more than 4.00.

When Da/Db is within the range set forth above, peel strength of an electrode can be further improved.

Note that the "average particle diameter Da" of a particulate binder referred to in the present disclosure means the "cumulant average particle diameter determined through cumulant analysis of a particle size distribution (by volume) measured by dynamic light scattering" and can be measured by a method described in the EXAMPLES section of the present specification.

Also note that the "average particle diameter Db" of a particulate binder referred to in the present disclosure means the "particle diameter (D50) at which cumulative volume calculated from a small diameter end of a particle size distribution (by volume) measured by laser diffraction/scattering reaches 50%" and can be measured by a method described in the EXAMPLES section of the present specification.

{5} The binder composition for a non-aqueous secondary battery electrode according to any one of the foregoing {1} to {4}, wherein an average particle diameter Db of the particulate binder measured by laser diffraction/scattering is not less than 100 nm and not more than 400 nm.

When the average particle diameter Db of the particulate binder is within the range set forth above, peel strength of an electrode can be further improved. Moreover, injectability of electrolyte solution in a secondary battery can be improved, and internal resistance of a secondary battery can be reduced.

{6} The binder composition for a non-aqueous secondary battery electrode according to any one of the foregoing {1} to {5}, wherein the particulate binder includes a polymer (A) including either or both of an aliphatic conjugated diene monomer unit and a (meth)acrylic acid ester monomer unit.

When the particulate binder includes a polymer (A) including an aliphatic conjugated diene monomer unit and/or a (meth)acrylic acid ester monomer unit, internal resistance of a secondary battery can be reduced while also enhancing cycle characteristics of the secondary battery.

Note that a "monomer unit" of a polymer referred to in the present disclosure means a "repeating unit derived from the monomer that is included in a polymer obtained using that monomer". The amount of a specific repeating unit in a polymer can be measured by a nuclear magnetic resonance (NMR) method such as $^1$H-NMR or $^{13}$C-NMR.

Moreover, "(meth)acrylic acid" in the present disclosure means acrylic acid and/or methacrylic acid.

{7} The binder composition for a non-aqueous secondary battery electrode according to any one of the foregoing {1} to {6}, wherein the binder composition for a non-aqueous secondary battery electrode has a pH of not lower than 6.0 and not higher than 10.0.

When the pH of the binder composition is within the range set forth above, tackiness of the binder composition can be improved, and peel strength of an electrode can be further improved.

Note that the "pH" of a binder composition referred to in the present disclosure means the pH measured under a condition of a temperature of 25°C.

{8} The binder composition for a non-aqueous secondary battery electrode according to any one of the foregoing {1} to {7}, wherein an amount of tetrahydrofuran-insoluble content in the particulate binder is 70 mass% or more.

When the amount of tetrahydrofuran-insoluble content (hereinafter, also abbreviated as the "amount of THF-insoluble content") in the particulate binder is not less than the value set forth above, tackiness of the binder composition can be improved, and peel strength of an electrode can be further improved.

Note that the "amount of THF-insoluble content" in a particulate binder referred to in the present disclosure can be measured by a method described in the EXAMPLES section of the present specification.

{9} A slurry composition for a non-aqueous secondary battery electrode comprising: an electrode active material; and the binder composition for a non-aqueous secondary battery electrode according to any one of the foregoing {1} to {8}.

Through a slurry composition that contains an electrode active material and any one of the binder compositions set forth above, it is possible to cause an electrode to display excellent peel strength.

{10} An electrode for a non-aqueous secondary battery comprising an electrode mixed material layer formed using the slurry composition for a non-aqueous secondary battery electrode according to the foregoing {9}.

An electrode that includes an electrode mixed material layer obtained using a slurry composition containing an electrode active material and any one of the binder compositions set forth above has excellent peel strength.

{11} A non-aqueous secondary battery comprising a positive electrode, a negative electrode, a separator, and an electrolyte solution, wherein at least one of the positive electrode and the negative electrode is the electrode for a non-aqueous secondary battery according to the foregoing {10}.

(Advantageous Effect)

According to the present disclosure, it is possible to provide a binder composition for a non-aqueous secondary battery electrode that is capable of forming an electrode for a non-aqueous secondary battery having excellent peel strength and a slurry composition for a non-aqueous secondary battery electrode that contains this binder composition.

Moreover, according to the present disclosure, it is possible to provide an electrode for a non-aqueous secondary battery that has excellent peel strength and a non-aqueous secondary battery that includes this electrode for a non-aqueous secondary battery.

DETAILED DESCRIPTION

The following provides a detailed description of embodiments of the present disclosure.

A presently disclosed binder composition for a non-aqueous secondary battery electrode can be used in production of a presently disclosed slurry composition for a non-aqueous secondary battery electrode. Moreover, the presently disclosed slurry composition for a non-aqueous secondary battery electrode can be used in formation of an electrode of a non-aqueous secondary battery (electrode for a non-aqueous secondary battery) such as a lithium ion secondary battery. Furthermore, a feature of a presently disclosed electrode for a non-aqueous secondary battery is that it includes an electrode mixed material layer formed from the presently disclosed slurry composition for a non-aqueous secondary battery electrode. Also, a feature of a presently disclosed non-aqueous secondary battery is that it includes an electrode for a non-aqueous secondary battery that has been produced using the presently disclosed slurry composition for a non-aqueous secondary battery electrode.

(Binder composition for non-aqueous secondary battery electrode)

The presently disclosed binder composition contains a particulate binder and water as a dispersion medium and may optionally further contain components other than the particulate binder and the dispersion medium (i.e., other components).

A feature of the presently disclosed binder composition is that the proportion constituted by a low elasticity region in a binder film cross-section is not less than 10% and not more than 86%.

As a result of the presently disclosed binder composition containing a particulate binder and water and the proportion constituted by a low elasticity region in a cross-section of a binder film as determined through elastic modulus measurement being within the range set forth above, it is possible to cause an electrode to display excellent peel strength by using this binder composition. Although it is not certain why the effect described above is achieved by using the presently disclosed binder composition set forth above, the reason for this is presumed to be as follows.

A feature of the presently disclosed binder composition is that the proportion constituted by a low elasticity region in a cross-section of a binder film is not less than 10% and not more than 86%. Through the proportion constituted by a low elasticity region in a cross-section of a binder film being not less than 10% and not more than 86%, both soft and hard regions can be said to be present in a suitable ratio in the particulate binder that is contained in the presently disclosed binder composition. Consequently, when a slurry composition that contains the presently disclosed binder composition is used to form an electrode mixed material layer on a current collector, the particulate binder is thought to deform to a suitable degree and enable good adhesion among an electrode active material while also enabling strong close adherence of the electrode active material to a current collector (i.e., improving peel strength of an electrode).

This is considered to be the reason that an electrode can be caused to display excellent peel strength by using the presently disclosed binder composition.

<Particulate binder>

In an electrode mixed material layer that has been formed using a slurry composition containing the binder composition, the particulate binder holds components such as an electrode active material that are contained in the electrode mixed material layer so that they are not shed from the electrode mixed material layer.

The particulate binder is water-insoluble particles that are formed of a polymer. Note that when particles are referred to as "water-insoluble" in the present disclosure, this means that when 0.5 g of the particles are dissolved in 100 g of water at a temperature of 25°C, insoluble content is 90 mass% or more.

<<Structure of particulate binder>>

No specific limitations are placed on the structure of the particulate binder so long as the proportion constituted by a low elasticity region in a cross-section of a binder film can be kept within the specific range set forth above. From a viewpoint of reducing internal resistance of a secondary battery while also enhancing cycle characteristics of the secondary battery, the particulate binder preferably includes a polymer (A) including either or both of an aliphatic conjugated diene monomer unit and a (meth)acrylic acid ester monomer unit.

The structure of the particulate binder including the polymer (A) is not specifically limited but, for example, may be any of the following.

(i) A particle formed of the single polymer (A)
(ii) A core-shell particle including a core portion (central portion) and a shell portion (outer shell) and in which one of the core portion and the shell portion is formed of the polymer (A)
(iii) A structure having a particle formed of the single polymer (A) inside of a surface layer portion containing a polymer (B)
(iv) A structure having a core-shell particle including a core portion and a shell portion inside of a surface layer portion containing a polymer (B) and in which one of the core portion and the shell portion is formed of the polymer (A)

Of these structures, structures (iii) and (iv) are preferable from a viewpoint of further improving peel strength of an electrode, and structure (iv) is more preferable.

In a case in which the particulate binder has structure (iv), it is preferable that the core portion is formed of the polymer (A) and that the shell portion is formed of a polymer (C) differing from the polymer (A) from a viewpoint of further improving peel strength of an electrode.

In a case in which the particulate binder has a surface layer portion (for example, a case in which the particulate binder has structure (iii) or (iv)), the proportion constituted by the surface layer portion in the particulate binder is preferably 0.5 mass% or more, more preferably 1 mass% or more, and even more preferably 2 mass% or more, and is preferably 10 mass% or less, more preferably 5 mass% or less, and even more preferably 4 mass% or less. When the proportion constituted by the surface layer portion in the particulate binder is within any of the ranges set forth above, tackiness of the binder composition can be improved, and peel strength of an electrode can be further improved.

Moreover, in a case in which the particulate binder has a core-shell particle (for example, a case in which the particulate binder has structure (iv)), the proportion constituted by the core portion in the particulate binder is preferably 50 mass% or more, more preferably 70 mass% or more, even more preferably 80 mass% or more, further preferably 85 mass% or more, and particularly preferably 90 mass% or more, and is preferably 99 mass% or less, more preferably 97 mass% or less, and even more preferably 95 mass% or less. When the proportion constituted by the core portion in the particulate binder is within any of the ranges set forth above, peel strength of an electrode can be further improved.

Furthermore, in a case in which the particulate binder has a core-shell particle (for example, a case in which the particulate binder has structure (iv)), the proportion constituted by the shell portion in the particulate binder is preferably 1 mass% or more, more preferably 2 mass% or more, and even more preferably 3 mass% or more, and is preferably 50 mass% or less, more preferably 25 mass% or less, even more preferably 10 mass% or less, and particularly preferably 5 mass% or less. When the proportion constituted by the shell portion in the particulate binder is within any of the ranges set forth above, peel strength of an electrode can be further improved.

The following describes the polymer (A), the polymer (B), and the polymer (C) in detail.

[Polymer (A)]

The polymer (A) includes either or both of an aliphatic conjugated diene monomer unit and a (meth)acrylic acid ester monomer unit and may optionally further include an acidic functional group-containing monomer unit and an aromatic vinyl monomer unit. Note that the polymer (A) may include monomer units other than an aliphatic conjugated diene monomer unit, a (meth)acrylic acid ester monomer unit, an acidic functional group-containing monomer unit, and an aromatic vinyl monomer unit (hereinafter, referred to as "other monomer units").

-Aliphatic conjugated diene monomer unit-

Examples of aliphatic conjugated diene monomers that can form an aliphatic conjugated diene monomer unit include 1,3-butadiene, 2-methyl-1,3-butadiene (isoprene), and 2,3-dimethyl-1,3-butadiene. One of these aliphatic conjugated diene monomers can be used individually, or two or more of these aliphatic conjugated diene monomers can be used in combination. Of these aliphatic conjugated diene monomers, 1,3-butadiene is preferable.

In a case in which the polymer (A) includes an aliphatic conjugated diene monomer unit, the proportion constituted by aliphatic conjugated diene monomer units in the polymer (A) when all repeating units (monomer units) in the polymer (A) are taken to be 100 mass% is preferably 50 mass% or more, more preferably 60 mass% or more, even more preferably 70 mass% or more, and particularly preferably 76 mass% or more, and is preferably 90 mass% or less, more preferably 85 mass% or less, and even more preferably 80 mass% or less. When the proportion constituted by aliphatic conjugated diene monomer units in the polymer (A) is within any of the ranges set forth above, peel strength of an electrode can be further improved.

-(Meth)acrylic acid ester monomer unit-

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, and 2-ethylhexyl acrylate; methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, and 2-ethylhexyl methacrylate; hydroxyl group-containing acrylic acid esters such as 2-hydroxymethyl acrylate, 2-hydroxyethyl acrylate, 2-hydroxypropyl acrylate, and 2-hydroxybutyl acrylate; and hydroxyl group-containing methacrylic acid esters such as 2-hydroxymethyl methacrylate, 2-hydroxyethyl methacrylate, 2-hydroxypropyl methacrylate, and 2-hydroxybutyl methacrylate. One of these (meth)acrylic acid ester monomers can be used individually, or two or more of these (meth)acrylic acid ester monomers can be used in combination. Of these (meth)acrylic acid ester monomers, (meth)acrylic acid alkyl esters are preferable, and n-butyl acrylate is more preferable.

In a case in which the polymer (A) includes a (meth)acrylic acid ester monomer unit, the proportion constituted by (meth)acrylic acid ester monomer units in the polymer (A) when all repeating units (monomer units) in the polymer (A) are taken to be 100 mass% is preferably 50 mass% or more, more preferably 70 mass% or more, and even more preferably 90 mass% or more, and is preferably 98 mass% or less, and more preferably 96 mass% or less. When the proportion constituted by (meth)acrylic acid ester monomer units in the polymer (A) is within any of the ranges set forth above, peel strength of an electrode can be further improved.

-Acidic functional group-containing monomer unit-

Examples of acidic functional group-containing monomers that can form an acidic functional group-containing monomer unit include carboxyl group-containing monomers, sulfo group-containing monomers, and phosphate group-containing monomers.

Note that an acidic functional group included in an acidic functional group-containing monomer unit may form a salt with an alkali metal, ammonia, or the like.

Examples of carboxyl group-containing monomers that can form a carboxyl group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-transaryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

Moreover, an acid anhydride that produces a carboxyl group through hydrolysis can also be used as a carboxyl group-containing monomer.

Furthermore, an ethylenically unsaturated polybasic carboxylic acid such as butene tricarboxylic acid or a partial ester of an ethylenically unsaturated polybasic carboxylic acid such as monobutyl fumarate or mono-2-hydroxypropyl maleate can also be used as a carboxyl group-containing monomer.

Examples of sulfo group-containing monomers that can form a sulfo group-containing monomer unit include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the monomers described above may be used individually, or two or more of the monomers described above may be used in combination. Moreover, carboxyl group-containing monomers are preferable, acrylic acid and methacrylic acid are more preferable, and methacrylic acid is even more preferable as an acidic functional group-containing monomer that can form an acidic functional group-containing monomer unit.

In a case in which the polymer (A) includes an acidic functional group-containing monomer unit, the proportion constituted by acidic functional group-containing monomer units in the polymer (A) when all repeating units (monomer units) in the polymer (A) are taken to be 100 mass% is preferably 0.1 mass% or more, more preferably 0.5 mass% or more, and even more preferably 1 mass% or more, and is preferably 5 mass% or less, and more preferably 2.5 mass% or less. When the proportion constituted by acidic functional group-containing monomer units in the polymer (A) is within any of the ranges set forth above, peel strength of an electrode can be further improved.

-Aromatic vinyl monomer unit-

Examples of aromatic vinyl monomers that can form an aromatic vinyl monomer unit include aromatic monovinyl compounds such as styrene, α-methylstyrene, p-t-butylstyrene, butoxystyrene, vinyltoluene, chlorostyrene, and vinylnaphthalene. One of these aromatic vinyl monomers can be used individually, or two or more of these aromatic vinyl monomers can be used in combination. Of these aromatic vinyl monomers, styrene is preferable.

In a case in which the polymer (A) includes an aromatic vinyl monomer unit, the proportion constituted by aromatic vinyl monomer units in the polymer (A) when all repeating units (monomer units) in the polymer (A) are taken to be 100 mass% is preferably 5 mass% or more, more preferably 10 mass% or more, and even more preferably 15 mass% or more, and is preferably 40 mass% or less, more preferably 30 mass% or less, and even more preferably 25 mass% or less. When the proportion constituted by aromatic vinyl monomer units in the polymer (A) is within any of the ranges set forth above, peel strength of an electrode can be further improved.

-Other monomer units-

No specific limitations are placed on other monomer units included in the polymer (A). Examples of other monomer units include a nitrile group-containing monomer unit, a cross-linkable monomer unit, and so forth.

Examples of nitrile group-containing monomers that can form a nitrile group-containing monomer unit include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. One of these nitrile group-containing monomers can be used individually, or two or more of these nitrile group-containing monomers can be used in combination. Of these nitrile group-containing monomers, acrylonitrile is preferable.

In a case in which the polymer (A) includes a nitrile group-containing monomer unit, the proportion constituted by nitrile group-containing monomer units in the polymer (A) when all repeating units (monomer units) in the polymer (A) are taken to be 100 mass% is preferably 0.5 mass% or more, and more preferably 1 mass% or more, and is preferably 5 mass% or less, and more preferably 2.5 mass% or less.

A cross-linkable monomer that can form a cross-linkable monomer unit is a monomer that includes at least two polymerizable double bonds (for example, olefinic double bonds) per molecule. Examples of cross-linkable monomers include polyfunctional (meth)acrylates such as allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate; polyfunctional allyl/vinyl ethers such as dipropylene glycol diallyl ether, polyglycol diallyl ether, triethylene glycol divinyl ether, hydroquinone diallyl ether, and tetraallyloxyethane; divinylbenzene; vinyl glycidyl ether; allyl glycidyl ether; N-methylolacrylamide; and acrylamide. One of these cross-linkable monomers can be used individually, or two or more of these cross-linkable monomers can be used in combination. Of these cross-linkable monomers, N-methylolacrylamide and allyl glycidyl ether are preferable.

In a case in which the polymer (A) includes a cross-linkable monomer unit, the proportion constituted by cross-linkable monomer units in the polymer (A) when all repeating units (monomer units) in the polymer (A) are taken to be 100 mass% is preferably 1 mass% or more, and more preferably 2 mass% or more, and is preferably 10 mass% or less, and more preferably 5 mass% or less.

[Polymer (B)]

The polymer (B) includes an acidic functional group-containing monomer unit and can optionally further include monomer units other than an acidic functional group-containing monomer unit.

The acidic functional group-containing monomer unit included in the polymer (B) may be any of those that were previously described in the "Polymer (A)" section. Of these acidic functional group-containing monomer units, a carboxyl group-containing monomer unit is preferable, and a methacrylic acid unit is more preferable.

When all repeating units (monomer units) in the polymer (B) are taken to be 100 mass%, the proportion in which the polymer (B) includes acidic functional group-containing monomer units is preferably 80 mass% or more, more preferably 90 mass% or more, even more preferably 95 mass% or more, and particularly preferably 100 mass% (i.e., the polymer (B) particularly preferably includes only acidic functional group-containing monomer units). When the proportion constituted by acidic functional group-containing monomer units in the polymer (B) is not less than any of the lower limits set forth above, peel strength of an electrode can be further improved, and cycle characteristics of a secondary battery can be enhanced. Moreover, tackiness of the binder composition can be improved.

[Polymer (C)]

The polymer (C) is a polymer differing from the polymer (A) and the polymer (B) described above. From a viewpoint of further improving peel strength of an electrode and reducing internal resistance of a secondary battery, the polymer (C) preferably includes an aromatic vinyl monomer unit, and more preferably includes an aromatic vinyl monomer unit and a (meth)acrylic acid ester monomer unit. Note that the polymer (C) may optionally further include monomer units other than an aromatic vinyl monomer unit and a (meth)acrylic acid ester monomer unit. Examples of monomer units other than an aromatic vinyl monomer unit and a (meth)acrylic acid ester monomer unit that may be included in the polymer (C) include a nitrile group-containing monomer unit such as previously described in the "Polymer (A)" section, for example.

The aromatic vinyl monomer unit included in the polymer (C) may be any of those that were previously described in the "Polymer (A)" section. Of these aromatic vinyl monomer units, a styrene unit is preferable.

When all repeating units (monomer units) in the polymer (C) are taken to be 100 mass%, the proportion in which the polymer (C) includes aromatic vinyl monomer units is preferably 30 mass% or more, more preferably 40 mass% or more, and even more preferably 50 mass% or more, and is preferably 100 mass% or less, more preferably 90 mass% or less, and even more preferably 70 mass% or less. When the proportion constituted by aromatic vinyl monomer units in the polymer (C) is within any of the ranges set forth above, tackiness of the binder composition can be improved, and peel strength of an electrode can be further improved while also reducing internal resistance of a secondary battery.

The (meth)acrylic acid ester monomer unit included in the polymer (C) may be any of those that were previously described in the "Polymer (A)" section. Of these (meth)acrylic acid ester monomer units, a methyl methacrylate unit is preferable.

In a case in which the polymer (C) includes a (meth)acrylic acid ester monomer unit, the proportion constituted by (meth)acrylic acid ester monomer units in the polymer (C) when all repeating units (monomer units) in the polymer (C) are taken to be 100 mass% is preferably 1 mass% or more, more preferably 10 mass% or more, and even more preferably 15 mass% or more, and is preferably 50 mass% or less, more preferably 40 mass% or less, and even more preferably 30 mass% or less.

<<Properties of particulate binder>>

[Average particle diameter Da measured by dynamic light scattering]

The average particle diameter Da of the particulate binder is preferably 100 nm or more, and more preferably 150 nm or more, and is preferably 800 nm or less, more preferably 600 nm or less, even more preferably 400 nm or less, and particularly preferably 250 nm or less.

Note that the value of the average particle diameter Da measured by dynamic light scattering is a value that comparatively strongly reflects spatial spreading of molecular chains in a surface layer portion of the particulate binder. In other words, in a case in which the particulate binder has a core-shell particle inside of a surface layer portion, for example, the value of the average particle diameter Da of the particulate binder is presumed to be dependent on the particle diameter of the overall structure (core portion, shell portion, and surface layer portion) of the particulate binder. Accordingly, the value of the average particle diameter Da of the particulate binder can be adjusted by altering the types and amounts of monomers used to form the particulate binder, the polymerization method and conditions, the structure of the particulate binder, and so forth, for example.

[Average particle diameter Db measured by laser diffraction/scattering]

The average particle diameter Db of the particulate binder is preferably 100 nm or more, more preferably 110 nm or more, and even more preferably 120 nm or more, and is preferably 400 nm or less, more preferably 300 nm or less, even more preferably 200 nm or less, and particularly preferably 150 nm or less. When the average particle diameter Db of the particulate binder is not less than any of the lower limits set forth above, injectability of electrolyte solution in a secondary battery can be improved, and internal resistance of a secondary battery can be reduced. On the other hand, when the average particle diameter Db of the particulate binder is not more than any of the upper limits set forth above, the surface area of the particulate binder increases, contact area between the particulate binder and an electrode active material increases, and, as a result, peel strength of an electrode can be further improved.

Note that the average particle diameter Db measured by laser diffraction/scattering is not significantly influenced by spatial spreading of molecular chains in the surface layer portion of the particulate binder. In other words, in a case in which the particulate binder has a core-shell particle inside of a surface layer portion, for example, the value of the average particle diameter Db of the particulate binder is presumed to be largely dependent on the particle diameter of the core portion and the shell portion, while only being slightly influenced by the surface layer portion. Accordingly, the value of the average particle diameter Db of the particulate binder can be adjusted by altering the types and amounts of monomers used to form a particle inside of the surface layer portion of the particulate binder, the polymerization conditions, and so forth, for example.

[Da/Db]

A ratio (Da/Db) of the average particle diameter Da relative to the average particle diameter Db of the particulate binder is preferably 1.05 or more, more preferably 1.20 or more, and even more preferably 1.40 or more, and is preferably 4.00 or less, more preferably 3.00 or less, even more preferably 2.00 or less, and particularly preferably 1.68 or less. When Da/Db is not less than any of the lower limits set forth above, migration of the particulate binder is inhibited during formation of an electrode mixed material layer on a current collector using a slurry composition that contains the binder composition, and the particulate binder is caused to be present in a well dispersed state in the electrode mixed material layer, thereby enabling further improvement of peel strength of an electrode. On the other hand, when Da/Db is not more than any of the upper limits set forth above, handleability of the binder composition can be improved.

[Amount of THF-insoluble content]

The amount of THF-insoluble content in the presently disclosed binder composition is preferably 70 mass% or more, more preferably 80 mass% or more, even more preferably 90 mass% or more, and particularly preferably 95 mass% or more. When the amount of THF-insoluble content is not less than any of the lower limits set forth above, tackiness of the binder composition can be improved, and cycle characteristics of a secondary battery can be enhanced. Note that the upper limit for the amount of THF-insoluble content is not specifically limited and can be set as less than 100 mass%, or can be set as 99 mass% or less, for example.

<Dispersion medium>

No specific limitations are placed on the dispersion medium of the presently disclosed binder composition so long as water is included as the dispersion medium. For example, the presently disclosed binder composition may contain only water as the dispersion medium or may contain a mixture of water and an organic solvent (for example, an ester, a ketone, or an alcohol) as the dispersion medium. Note that the presently disclosed binder composition may contain one type of organic solvent or may contain two or more types of organic solvents.
The proportion constituted by water among the dispersion medium contained in the presently disclosed binder composition when the mass of the entire dispersion medium is taken to be 100 mass% is preferably not less than 70 mass% and not more than 100 mass%, more preferably not less than 80 mass% and not more than 100 mass%, even more preferably not less than 90 mass% and not more than 100 mass%, and particularly preferably not less than 95 mass% and not more than 100 mass% from a viewpoint of further improving peel strength of an electrode.

<Other components>

The presently disclosed binder composition may contain other components such as an acidic water-soluble polymer, an antioxidant, and a preservative, for example, besides the particulate binder and the dispersion medium described above.
Note that one of such other components may be used individually, or two or more of such other components may be used in combination in freely selected ratio.

<<Acidic water-soluble polymer>>

An acidic water-soluble polymer that can be contained in the binder composition may, for example, be produced by polymerization as a by-product from a monomer serving as a raw material of the particulate binder during production of the particulate binder by polymerization. The acidic water-soluble polymer such as described above may, for example, be a polymer that includes an acidic functional group-containing monomer unit and that can optionally further include monomer units other than an acidic functional group-containing monomer unit. Examples of acidic functional group-containing monomers that can form an acidic functional group-containing monomer unit included in the acidic water-soluble polymer include those that were previously described in the "Particulate binder" section.
The weight-average molecular weight of such an acidic water-soluble polymer is preferably 500 or more, more preferably 700 or more, and even more preferably 1,000 or more, and is preferably 20,000 or less, more preferably 15,000 or less, even more preferably 8,000 or less, further preferably 3,500 or less, and particularly preferably 2,000 or less. When the weight-average molecular weight of the acidic water-soluble polymer is not less than any of the lower limits set forth above, peel strength of an electrode can be further improved. Moreover, when the weight-average molecular weight of the acidic water-soluble polymer is not more than any of the upper limits set forth above, tackiness of the binder composition can be improved by inhibiting an excessive increase of viscosity of the binder composition.
Note that the acidic water-soluble polymer may be in the form of a salt (salt of an acidic water-soluble polymer). In other words, the term "acidic water-soluble polymer" as used in the present disclosure also encompasses a salt of that acidic water-soluble polymer. Also note that when a polymer is said to be "water-soluble" in the present disclosure, this means that when 0.5 g of the polymer is dissolved in 100 g of water at a temperature of 25°C, insoluble content is less than 10 mass%.

<Properties>

<<Proportion of low elasticity region>>

With the presently disclosed binder composition, the proportion constituted by a low elasticity region where the elastic modulus is less than 10 MPa in a cross-section of a binder film is required to be not less than 10% and not more than 86%, and the proportion constituted by the low elasticity region is preferably 15% or more, more preferably 20% or more, and even more preferably 30% or more, and is preferably 80% or less, more preferably 70% or less, even more preferably 60% or less, further preferably 50% or less, and particularly preferably 45% or less. When the proportion constituted by the low elasticity region in a cross-section of a binder film is 10% or more, flexibility of the particulate binder is sufficiently ensured, and peel strength of an electrode can be improved. On the other hand, when the proportion constituted by the low elasticity region in a cross-section of a binder film is 86% or less, flexibility of the particulate binder can be restricted from excessively increasing, peel strength of an electrode can be improved, and internal resistance of a secondary battery can be reduced. Moreover, when the proportion constituted by the low elasticity region in a cross-section of a binder film is 86% or less, tackiness of the binder composition improves.

<<Proportion of high elasticity region>>

With the presently disclosed binder composition, the proportion constituted by a high elasticity region where the elastic modulus is 10 MPa or more in a cross-section of a binder film is required to be not less than 14% and not more than 90%, and the proportion constituted by the high elasticity region is preferably 20% or more, more preferably 30% or more, even more preferably 40% or more, further preferably 50% or more, and particularly preferably 55% or more, and is preferably 85% or less, more preferably 80% or less, and even more preferably 70% or less. When the proportion constituted by the high elasticity region in a cross-section of a binder film is 14% or more, flexibility of the particulate binder can be restricted from excessively increasing, peel strength of an electrode can be improved, and internal resistance of a secondary battery can be reduced. Moreover, when the proportion constituted by the high elasticity region in a cross-section of a binder film is 14% or more, tackiness of the binder composition improves. On the other hand, when the proportion constituted by the high elasticity region in a cross-section of a binder film is 90% or less, flexibility of the particulate binder is sufficiently ensured, and peel strength of an electrode can be improved.

Note that the proportion constituted by the low elasticity region and the proportion constituted by the high elasticity region in a cross-section of a binder film can be adjusted by altering the types and amounts of monomers used to produce the particulate binder, the polymerization method and conditions, and so forth, for example. Specifically, the proportion constituted by the low elasticity region is reduced (i.e., the proportion constituted by the high elasticity region is increased) by increasing the amount of an aromatic vinyl monomer that is used to produce the particulate binder, whereas the proportion constituted by the low elasticity region is increased (i.e., the proportion constituted by the high elasticity region is reduced) by reducing the amount of the aromatic vinyl monomer. Moreover, in a case in which the particulate binder is produced by a procedure including multistage polymerization, the proportion constituted by the low elasticity region is reduced (i.e., the proportion constituted by the high elasticity region is increased) by adopting continuous addition as an addition method of an acidic functional group-containing monomer in a final stage of the multistage polymerization, whereas the proportion constituted by the low elasticity region is increased (i.e., the proportion constituted by the high elasticity region is reduced) by adopting addition all at once as the addition method.

<<Standard deviation>>

With the presently disclosed binder composition, the standard deviation of the elastic modulus in a cross-section of a binder film is preferably 5.0 or more, more preferably 7.5 or more, and even more preferably 10.0 or more, and is preferably 20.0 or less, more preferably 17.5 or less, and even more preferably 15.0 or less. When the standard deviation of the elastic modulus is not less than any of the lower limits set forth above, internal resistance of a secondary battery can be reduced. Moreover, when the standard deviation of the elastic modulus is not more than any of the upper limits set forth above, peel strength of an electrode can be further improved.

Note that the standard deviation of the elastic modulus can be adjusted by altering the types and amounts of monomers used to produce the particulate binder, the polymerization method and conditions, and so forth, for example.

<<90th percentile value>>

With the presently disclosed binder composition, a 90th percentile value of the elastic modulus in a cross-section of a binder film is preferably 20 MPa or more, more preferably 25 MPa or more, and even more preferably 30 MPa or more, and is preferably 100 MPa or less, more preferably 80 MPa or less, even more preferably 60 MPa or less, and particularly preferably 40 MPa or less. When the 90th percentile value of the elastic modulus is not less than any of the lower limits set forth above, tackiness of the binder composition can be improved, and internal resistance of a secondary battery can be reduced. Moreover, when the 90th percentile value of the elastic modulus is not more than any of the upper limits set forth above, peel strength of an electrode can be further improved.

Note that the 90th percentile value of the elastic modulus can be adjusted by altering the types and amounts of monomers used to produce the particulate binder, the polymerization method and conditions, and so forth, for example.

Specifically, the 90th percentile value of the elastic modulus is increased by increasing the amount of an aromatic vinyl monomer that is used to produce the particulate binder, whereas the 90th percentile value of the elastic modulus is reduced by reducing the amount of the aromatic vinyl monomer.

<<pH>>

The pH of the binder composition (pH of the dispersion medium) is preferably 6.0 or higher, and more preferably 7.0 or higher, and is preferably 10.0 or lower, more preferably 9.0 or lower, and even more preferably 8.0 or lower. When the pH of the binder composition is not lower than any of the lower limits set forth above, peel strength of an electrode can be further improved. On the other hand, when the pH of the binder composition is not higher than any of the upper limits set forth above, tackiness of the binder composition can be improved by inhibiting an excessive increase of viscosity of the binder composition.

Note that the pH can be adjusted by adding an alkali to the binder composition, for example. The alkali may be lithium hydroxide, sodium hydroxide, potassium hydroxide, or ammonia water, for example, and is preferably ammonia water because aggregates have a low tendency to form due to addition shock during alkali neutralization.

<Production of binder composition for non-aqueous secondary battery electrode>

The presently disclosed binder composition can be produced by polymerizing monomer(s) serving as the basis for structural units included in the particulate binder in an emulsion. Such a production method may be a batch emulsion polymerization method, an emulsion (Em) prop method, or a seeded polymerization method, for example.

The batch emulsion polymerization method may be implemented by the following procedure, for example. The monomer(s) serving as the basis for monomer units included in the particulate binder are mixed with water, an emulsifier, and a polymerization initiator. The mixture (emulsion) is heated to perform a polymerization reaction. At the point at which a specific polymerization conversion rate has been reached, cooling is performed to quench the reaction to yield a mixture containing a particulate binder. Unreacted monomer is removed from the mixture. The pH of the mixture is adjusted to within a preferred pH range of the dispersion medium described above, and other components such as described above are optionally added to obtain a water dispersion as a binder composition. Heating in the polymerization reaction may be performed to 40°C or higher, 45°C or higher, 50°C or higher, 55°C or higher, or 60°C or higher, for example, and may be performed to 90°C or lower, 85°C or lower, 80°C or lower, 75°C or lower, or 70°C or lower, for example. Removal of unreacted monomer from the mixture may be performed by thermal-vacuum distillation or by blowing in steam, for example.

The Em prop method may be implemented by the following procedure, for example. Monomer(s) for core portion formation (monomer(s) for forming the polymer (A) described above) are mixed with water, an emulsifier, a polymerization initiator, and optionally a chain transfer agent. The mixture (emulsion) is heated, and a polymerization reaction is performed until a specific polymerization conversion rate is reached to yield a mixture containing a seed particle polymer as a core portion. Next, monomer(s) for shell portion formation (monomer(s) for forming the polymer (C) described above) and optionally an emulsifier and water are added to the mixture, and polymerization is continued. Next, monomer(s) for surface layer portion formation (monomer(s) for forming the polymer (B) described above) and optionally an emulsifier and water are continuously added to the mixture, and polymerization is continued. At the point at which a specific polymerization conversion rate has been reached, cooling is performed to quench the reaction to yield a mixture containing a particulate binder. Unreacted monomer is removed from the mixture. The pH of the mixture is adjusted to within a preferred pH range of the dispersion medium described above, and other components such as described above are optionally added to obtain a water dispersion as a binder composition containing a particulate binder having a core-shell particle and a surface layer portion.

The seeded polymerization method is implemented by, for example, with respect to a seed particle polymer formed of a polymer that includes at least one monomer unit among monomer units included in the polymer (A), mixing monomer(s) for polymer (A) formation (excluding monomer(s) used in formation of the seed particle polymer), water, an emulsifier, a polymerization initiator, and optionally a chain transfer agent, and performing a polymerization reaction, etc. in the same manner as described above to yield a mixture containing a seed particle polymer as a core portion. Next, monomer(s) for shell portion formation (monomer(s) for forming the polymer (C) described above) and optionally an emulsifier and water are added to the mixture, and polymerization is continued. Next, monomer(s) for surface layer portion formation (monomer(s) for forming the polymer (B) described above) and optionally an emulsifier and water are continuously added to the mixture, and polymerization is continued. At the point at which a specific polymerization conversion rate has been reached, cooling is performed to quench the reaction to yield a mixture containing a particulate binder. Unreacted monomer is removed from the mixture. The pH of the mixture is adjusted to within a preferred pH range of the dispersion medium described above, and other components such as described above are optionally added to obtain a water dispersion as a binder composition for a non-aqueous secondary battery electrode containing a particulate binder having a core-shell particle and a surface layer portion.

In a case in which the particulate binder has a particle formed of the single polymer (A) inside of a surface layer portion containing the polymer (B), production of the binder composition may be performed by the following procedure including two-stage polymerization, for example.

First, monomer(s) for polymer (A) formation are mixed with water, an emulsifier, a chain transfer agent, and a polymerization initiator. The mixture is heated, and a polymerization reaction is performed until a specific polymerization conversion rate is reached to form particles formed of the polymer (A). Next, monomer(s) for polymer (B) formation and optionally an emulsifier and water are continuously added to the reaction liquid, and polymerization is continued. At the point at which a specific polymerization conversion rate has been reached, cooling is performed to quench the reaction to yield a mixture containing a particulate binder. Unreacted monomer is removed from the mixture. The pH of the mixture is adjusted to within a preferred pH range of the dispersion medium described above, and other components such as described above are optionally added.

In a case in which the particulate binder has a core-shell particle including a core portion formed of the polymer (A) and a shell portion formed of the polymer (C), inside of a surface layer portion containing the polymer (B), production of the binder composition may be performed by the following procedure including three-stage polymerization, for example.

First, as a first stage of polymerization, monomer(s) for polymer (A) formation are mixed with water, an emulsifier, a chain transfer agent, and a polymerization initiator. The mixture is heated, and a polymerization reaction is performed until a specific polymerization conversion rate is reached to form particles formed of the polymer (A).

Next, as a second stage of polymerization, monomer(s) for polymer (C) formation and optionally an emulsifier and water are added to the reaction liquid, and polymerization is continued. At the point at which a specific polymerization conversion rate has been reached, cooling is performed to quench the reaction to yield a water dispersion of a polymer containing water and core-shell particles including a core portion formed of the polymer (A) and a shell portion formed of the polymer (C).

Next, as a third stage of polymerization, monomer(s) for polymer (B) formation and optionally an emulsifier and water are continuously added to the reaction liquid, and polymerization is continued. Unreacted monomer may be removed from the reaction liquid after each stage of polymerization. The pH of the reaction liquid after the reaction is optionally adjusted to a preferred pH of the dispersion medium described above, and other components such as described above are optionally added.

From a viewpoint of making it easy to keep the proportion occupied by the low elasticity region in a cross-section of a binder film within the specific range set forth above, an acidic functional group-containing monomer used to form the polymer (B) is preferably continuously added.

Moreover, from a viewpoint of making it easy to keep the proportion occupied by the low elasticity region in a cross-section of a binder film within the specific range set forth above, the polymerization temperature during formation of the polymer (B) is preferably set as not lower than 75°C and not higher than 90°C.

The emulsifier used in production of the binder composition may be alkyl diphenyl ether disulfonic acid, dodecylbenzenesulfonic acid, lauryl sulfuric acid, or a salt (for example, a potassium salt or a sodium salt) of any thereof. Of these emulsifiers, an alkyl diphenyl ether disulfonic acid salt is preferable. One emulsifier may be used individually, or two or more emulsifiers may be used in combination in a freely selected ratio. The additive amount of the emulsifier is preferably 0.1 parts by mass or more, and more preferably 0.2 parts by mass or more relative to 100 parts by mass of the total amount of monomer(s) of polymer(s) forming the particulate binder, and is preferably 10 parts by mass or less, and more preferably 5 parts by mass or less relative to 100 parts by mass of the total amount of monomer(s) of polymer(s) forming the particulate binder.

A known polymerization initiator such as potassium persulfate, sodium persulfate, n-butyllithium, or ammonium persulfate, for example, may be used as the polymerization initiator without any specific limitations. One polymerization initiator may be used individually, or two or more polymerization initiators may be used in combination in a freely selected ratio. The additive amount of the polymerization initiator is preferably 0.05 parts by mass or more, and more preferably 0.1 parts by mass or more relative to 100 parts by mass of the total amount of monomer(s) of polymer(s) forming the particulate binder, and is preferably 10 parts by mass or less, and more preferably 5 parts by mass or less relative to 100 parts by mass of the total amount of monomer(s) of polymer(s) forming the particulate binder.

A known chain transfer agent such as α-methylstyrene dimer, tert-dodecyl mercaptan, or 3-mercapto-1,2-propanediol, for example, may be used as the chain transfer agent without any specific limitations. The additive amount of the chain transfer agent is preferably 0.05 parts by mass or more, and more preferably 0.5 parts by mass or less relative to 100 parts by mass of the total amount of monomer(s) of polymer(s) forming the particulate binder.

(Slurry composition for non-aqueous secondary battery electrode)

The presently disclosed slurry composition is a composition that is for use in an application of forming an electrode mixed material layer of an electrode, that contains an electrode active material and the presently disclosed binder composition set forth above, and that optionally further contains components other than the aforementioned components (hereinafter, referred to as "other components"). In other words, the presently disclosed slurry composition normally contains an electrode active material, the particulate binder described above, and a dispersion medium including water, and optionally further contains other components. The presently disclosed slurry composition can cause an electrode to display excellent peel strength as a result of containing the binder composition set forth above.

Although the following describes, as one example, a case in which the slurry composition for a non-aqueous secondary battery electrode is a slurry composition for a lithium ion secondary battery negative electrode, the presently disclosed slurry composition for a non-aqueous secondary battery electrode is not limited to the following example.

<Electrode active material>

The electrode active material is a material that gives and receives electrons in an electrode of a secondary battery. Moreover, a negative electrode active material for a lithium ion secondary battery is normally a material that can occlude and release lithium.

Specific examples of negative electrode active materials for lithium ion secondary batteries include carbon-based negative electrode active materials, metal-based negative electrode active materials, and negative electrode active materials formed by combining these materials.

A carbon-based negative electrode active material refers to an active material having carbon as a main skeleton into which lithium can be inserted (also referred to as "doping"). Examples of carbon-based negative electrode active materials include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals (for example, Ag, Al, Ba, Bi, Cu, Ga, Ge, In, Ni, P, Pb, Sb, Si, Sn, Sr, Zn, and Ti) that can form a lithium alloy and alloys thereof, and oxides, sulfides, nitrides, silicides, carbides, phosphides, and so forth of any of the preceding examples. Of these metal-based negative electrode active materials, active materials containing silicon (silicon-based negative electrode active materials) are preferred. One reason for this is that the capacity of a lithium ion secondary battery can be increased through use of a silicon-based negative electrode active material.

Examples of the silicon-based negative electrode active material include silicon (Si), a silicon-containing alloy, SiO, $SiO_x$, and a composite material of conductive carbon and a Si-containing material obtained by coating or combining the Si-containing material with the conductive carbon. One of these silicon-based negative electrode active materials may be used individually, or two or more of these silicon-based negative electrode active materials may be used in combination.

<Binder composition>

The presently disclosed binder composition that contains the specific particulate binder described above and a dispersion medium including water and that optionally further contains other components is used as the binder composition.

The content of the specific particulate binder described above in the slurry composition can be set as not less than 0.5 parts by mass and not more than 15 parts by mass in terms of solid content per 100 parts by mass of the electrode active material.

<Other components>

Examples of other components that may be contained in the slurry composition include, but are not specifically limited to, the same other components as may be contained in the presently disclosed binder composition. The slurry composition may further contain a conductive material such as carbon black. One of these components may be used individually, or two or more of these components may be used in combination in a freely selected ratio.

<Production of slurry composition for non-aqueous secondary battery electrode>

No specific limitations are placed on the method by which the slurry composition is produced.

For example, the slurry composition can be produced by mixing the binder composition, the electrode active material, and other components that are used as necessary in the presence of an aqueous phase (aqueous medium) that is contained in the binder composition.

Note that no specific limitations are placed on the mixing method, and mixing can be performed using a typically used stirrer or disperser.

(Electrode for non-aqueous secondary battery)

The presently disclosed electrode for a non-aqueous secondary battery includes an electrode mixed material layer that has been formed using the slurry composition for a non-aqueous secondary battery electrode set forth above. Accordingly, the electrode mixed material layer is formed of a dried product of the slurry composition set forth above, normally contains an electrode active material and a component derived from a particulate binder, and optionally further contains other components. Note that components contained in the electrode mixed material layer are components that were contained in the slurry composition for a non-aqueous secondary battery electrode set forth above and that the preferred ratio of these components is the same as the preferred ratio of the components in the slurry composition. Also note that although the particulate binder is present in a particulate form in the slurry composition, the particulate binder may have a particulate form or may have any other form in the electrode mixed material layer that has been formed using the slurry composition.

The presently disclosed electrode for a non-aqueous secondary battery has excellent peel strength as a result of the electrode mixed material layer being formed using the slurry composition for a non-aqueous secondary battery electrode set forth above.

<Formation method of electrode>

The electrode mixed material layer of the presently disclosed electrode can be formed by any of the following methods, for example.

(1) A method in which the presently disclosed slurry composition is applied onto the surface of a current collector and is then dried

(2) A method in which a current collector is immersed in the presently disclosed slurry composition and is then dried

(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the functional layer. In more detail, method (1) includes a step of applying the slurry composition onto a current collector (application step) and a step of drying the slurry composition that has been applied onto the current collector to form an electrode mixed material layer on the current collector (drying step).

<<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

<<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, an electron beam, or the like. Through drying of the slurry composition on the current collector in this manner, an electrode mixed material layer can be formed on the current collector to thereby obtain an electrode that includes the current collector and the electrode mixed material layer.

After the drying step, the electrode mixed material layer may be further subjected to a pressing process by mold pressing, roll pressing, or the like. This pressing process can improve close adherence between the electrode mixed material layer and the current collector and enables even further densification of the obtained electrode mixed material layer. Furthermore, in a case in which the electrode mixed material layer contains a curable polymer, the polymer is preferably cured after the electrode mixed material layer has been formed.

(Non-aqueous secondary battery)

The presently disclosed non-aqueous secondary battery includes a positive electrode, a negative electrode, an electrolyte solution, and a separator and has the presently disclosed electrode for a non-aqueous secondary battery set forth above as at least one of the positive electrode and the negative electrode.

Although the following describes, as one example, a case in which the secondary battery is a lithium ion secondary battery, the presently disclosed secondary battery is not limited to the following example.

<Electrodes>

As described above, the presently disclosed electrode for a secondary battery is used as at least one of the positive electrode and the negative electrode. In other words, the positive electrode of the lithium ion secondary battery may be the presently disclosed electrode and the negative electrode of the lithium ion secondary battery may be a known negative electrode other than the presently disclosed electrode. Alternatively, the negative electrode of the lithium ion secondary battery may be the presently disclosed electrode and the positive electrode of the lithium ion secondary battery may be a known positive electrode other than the presently disclosed electrode. Further alternatively, the positive electrode and the negative electrode of the lithium ion secondary battery may both be the presently disclosed electrode.

Note that an electrode obtained by forming an electrode mixed material layer on a current collector by a known production method can be used as a known electrode other than the presently disclosed electrode for a secondary battery.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferred as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

<Separator>

The separator can be any of those described in JP2012-204303A, for example, without any specific limitations.

Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

<Production method of non-aqueous secondary battery>

The presently disclosed non-aqueous secondary battery may be produced, for example, by stacking the positive electrode and the negative electrode with the separator in-between, performing rolling, folding, or the like of the resultant laminate as necessary in accordance with the battery shape, placing the laminate in a battery container, injecting the electrolyte solution into the battery container, and sealing the battery container. In the presently disclosed non-aqueous secondary battery, the electrode for a non-aqueous secondary battery set forth above is used as at least one of the positive electrode and the negative electrode, and is preferably used as the negative electrode. Note that the presently disclosed non-aqueous secondary battery may be provided with an overcurrent preventing device such as a fuse or a PTC device; an expanded metal; a lead plate; or the like, as necessary, in order to prevent pressure increase inside the secondary battery and occurrence of overcharging or overdischarging. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the proportions constituted by a low elasticity region and a high elasticity region in a cross-section of a binder film, the standard deviation and 90th percentile value of elastic modulus, the average particle diameters Da and Db of a particulate binder, the amount of THF-insoluble content, the tackiness of a binder composition, the peel strength of a negative electrode, and the internal resistance and cycle characteristics of a lithium ion secondary battery.

<Elastic modulus>

A binder composition for a negative electrode produced in each example or comparative example was dried in an environment of 50% humidity and 23°C to 25°C to obtain a film of approximately 0.3 mm in thickness.

The obtained binder film was cut under a -80°C atmosphere using a cryomicrotome to prepare a film slice of 1 $\mu$m in thickness. The film slice was picked up onto a clean Si wafer, and this was taken to be a measurement sample. An atomic force microscope (produced by Bruker; product name: Dimension Icon® (Dimension Icon is a registered trademark in Japan, other countries, or both)) was used to perform measurement within a 500 nm square range in a cross-section of the film slice such that the number of measurement points was 16,384 to thereby obtain a force curve. The obtained force curve was analyzed based on JKR theory to calculate the elastic modulus at each measurement point. The value of the elastic modulus at each measurement point obtained in this manner was used to determine the proportion constituted by a low elasticity region, the proportion constituted by a high elasticity region, and the standard deviation and 90th percentile value of the elastic modulus. Note that measurement conditions of the atomic force microscope (AFM) were as follows.

Measurement mode: PeakForce QNM (force curve method)
Cantilever: AC240TS (spring constant: approximately 1.4 N/m)
Resolution: 128 $\times$ 128
Maximum pressing load: 1 nN

[Proportion of low elasticity region and proportion of high elasticity region]

The proportion (%) constituted by a low elasticity region and the proportion (%) constituted by a high elasticity region were calculated according to the following formulae by, among the 16,384 measurement points, taking the number of measurement points where the elastic modulus was less than 10 MPa to be N1 and taking the number of measurement points where the elastic modulus was 10 MPa or more to be N2.

$$\text{Proportion of low elasticity region (\%)} = (N1/16384) \times 100$$

$$\text{Proportion of high elasticity region (\%)} = (N2/16384) \times 100$$

[Standard deviation]

A histogram was prepared with elastic modulus (MPa) on the horizontal axis, frequency (number of measurement points) on the vertical axis, and a class width of 0.5 MPa, and the standard deviation of the elastic modulus was calculated from this histogram.

[90th percentile value]

The 90th percentile value of the elastic modulus was calculated as a value corresponding to the 90th percentile as counted from a smallest elastic modulus among the measurement points.

<Average particle diameter Da>

A particle size analyzer (produced by Otsuka Electronics Co., Ltd.; model: nanoSAQLA) having dynamic light scattering as a measurement principle was used to measure a particle size distribution (by volume) for a binder composition for a negative electrode produced in each example or comparative example, and the cumulant average particle diameter obtained through cumulant analysis was taken to be the average particle diameter Da. Note that the measurement conditions in dynamic light scattering were as follows.

Dispersion medium: Deionized water
Measurement temperature: $25 \pm 1°C$
Measurement concentration (solid content concentration): 0.5%
Scattering angle: 168.8°
Light source laser wavelength: 660 nm

<Average particle diameter Db>

A particle size analyzer (produced by Beckman Coulter, Inc.; product name: LS13 320 XR) having laser diffraction/scattering as a measurement principle was used to measure a particle size distribution (by volume) for a binder composition for a negative electrode produced in each example or comparative example, and the particle diameter (D50) at which cumulative volume calculated from a small diameter end in the measured particle size distribution reached 50% was taken to be the average particle diameter Db.

<Amount of THF-insoluble content>

A binder composition produced in each example or comparative example was used to measure the amount of THF-insoluble content in a particulate binder. Specifically, the binder composition was first dried in an environment of 50% humidity and 23°C to 25°C to obtain a film of approximately 0.3 mm in thickness. Next, the film was cut to 3 mm-square, and the mass of a film piece obtained by cutting was taken to be WO. Next, this film piece was immersed in 100 g of tetrahydrofuran (THF) at 25°C for 24 hours. Thereafter, the film piece was pulled out of the THF, the pulled out film piece was vacuum dried at 105°C for 3 hours, and the mass W1 of the dried film piece (mass of insoluble content) was measured. The amount of THF-insoluble content (mass%) was calculated according to the following formula.

$$\text{Amount of THF-insoluble content (mass\%)} = (W1/W0) \times 100$$

<Tackiness>

A binder composition produced in each example or comparative example was applied onto copper foil and was dried at 110°C for 5 minutes to prepare a binder film of 5 μm in thickness. The prepared binder film was cut out with dimensions of 30 mm × 20 mm to obtain a test specimen. One surface of this test specimen was subjected to a pressing operation using an SUS probe (Ø10 mm) with a pressing rate of 3 mm/s, a pressing load of 100 gf, and a pressing holding time of 1 second. The tack strength (N) when the SUS probe was subsequently raised with an elevation rate of 3 mm/s was measured. The tack strength was evaluated by the following standard. A lower tack strength results in better productivity without adhesion to a dryer or the like occurring (high tack strength is undesirable not only because strong adhesion to a wall of a dryer, to a conveyer, or the like starts to arise and production efficiency falls, but also because of problems such as inability to achieve uniform quality). Moreover, lower tack strength results in less stickiness to a roll during processing by a roll and can be judged to indicate excellent roll processability.

A: Tack strength of 6 N or less
B: Tack strength of more than 6 N and not more than 8 N
C: Tack strength of more than 8 N and not more than 12 N
D: Tack strength of more than 12 N

<Peel strength>

A negative electrode produced in each example or comparative example was cut out as a rectangle of 100 mm in length and 10 mm in width to obtain a test specimen. This test specimen was placed with the surface of the negative electrode mixed material layer facing downward, and cellophane tape was affixed to the surface of the negative electrode mixed material layer. Tape prescribed by JIS Z1522 was used as the cellophane tape. Moreover, the cellophane tape was fixed to a test stage in advance. Thereafter, one end of the current collector was pulled vertically upward at a pulling speed of 50 mm/min to peel off the current collector, and the stress during this peeling was measured. This measurement was made three times, and an average value of the stress was determined. The average value was taken to be the peel strength and was evaluated by the following standard.

A: Peel strength of 10 N/m or more
B: Peel strength of not less than 8 N/m and less than 10 N/m
C: Peel strength of not less than 6 N/m and less than 8 N/m
D: Peel strength of less than 6 N/m

<Internal resistance>

IV resistance was measured as follows in order to evaluate the internal resistance of a lithium ion secondary battery produced in each example or comparative example. The lithium ion secondary battery was subjected to conditioning in which operations of charging to a voltage of 4.2 V with a 0.1C charge rate, resting for 10 minutes, and subsequently constant-current (CC) discharging to 3.0 V with a 0.1C discharge rate were repeated three times at a temperature of 25°C. Thereafter, in a -10°C environment, the lithium ion secondary battery was charged to 3.75 V at 1C (C is a value expressing rated capacity (mA)/1 hour (h)) and was subsequently subjected to 20 seconds of charging and 20 seconds of discharging at each of 0.5C, 1.0C, 1.5C, and 2.0C, centered on 3.75 V. The battery voltage after 15 seconds at the charging side in each of these cases was plotted against the current value, and the gradient of this plot was determined as the IV resistance ($\Omega$). The obtained IV resistance value ($\Omega$) was evaluated by the following standard through comparison with the IV resistance in Comparative Example 3. Note that a smaller value for IV resistance indicates that the secondary battery has lower internal resistance.

A: Less than 85% relative to IV resistance in Comparative Example 3
B: Not less than 85% and less than 95% relative to IV resistance in Comparative Example 3
C: 95% or more relative to IV resistance in Comparative Example 3

<Cycle characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, constant-current (CC) constant-voltage (CV) charging (upper limit cell voltage 4.20 V) was performed by a 0.2C constant-current method, and then CC discharging was performed to 3.00 V by a 0.2C constant-current method. This charging and discharging at 0.2C was repeated three times.
Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. The discharge capacity of the 1st cycle was defined as X1 and the discharge capacity of the 100th cycle was defined as X2. A capacity change rate indicated by $\Delta C = (X1/X2) \times 100(\%)$ was determined using the discharge capacity X1 and the discharge capacity X2 and was then evaluated by the following standard. A larger value for the capacity change rate $\Delta C$ indicates better cycle characteristics.

A: $\Delta C$ of 93% or more
B: $\Delta C$ of not less than 90% and less than 93%
C: $\Delta C$ of less than 90%

(Example 1)

<Production of binder composition for negative electrode>

[First stage of polymerization]

A 5 MPa pressure-resistant vessel equipped with a stirrer was charged with 24.0 parts of styrene as an aromatic vinyl monomer, 73.0 parts of 1,3-butadiene as an aliphatic conjugated diene monomer, 2.0 parts of an alkyl diphenyl ether disulfonic acid salt as an emulsifier, 143.0 parts of deionized water, 0.1 parts of tert-dodecyl mercaptan as a chain transfer agent, and 0.3 parts of potassium persulfate as a polymerization initiator. These materials were thoroughly stirred, were subsequently heated to 55°C to initiate polymerization, and were reacted for 10 hours. Next, the pressure-resistant vessel was heated to 65°C, and the reaction was performed for a further 6 hours.

[Second stage of polymerization]

The pressure-resistant vessel was subsequently heated to 85°C, 3.0 parts of methacrylic acid as an acidic functional group-containing monomer was continuously added to the polymerization system over 1 hour, and then the reaction was performed for a further 8 hours. Unreacted monomer was subsequently removed through thermal-vacuum distillation. The above yielded a water dispersion of a particulate binder having a particle formed of a polymer (A) that had been formed in the first stage of polymerization, inside of a surface layer portion containing a polymer (B) that had been formed in the second stage of polymerization.

[pH adjustment]

The obtained water dispersion of the particulate binder was neutralized with ammonia water to adjust the pH to 7.0 and thereby obtain a binder composition for a negative electrode. This binder composition was used to measure the proportions constituted by a low elasticity region and a high elasticity region, the standard deviation and 90th percentile value of elastic modulus, Da and Db, and the THF-insoluble content and to evaluate tackiness. The results are shown in Table 1.

<Production of slurry composition for negative electrode>

A planetary mixer equipped with a disper blade was charged with 100 parts of artificial graphite (tap density: 0.85 g/cm$^3$; capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Daicel Corporation; product name: Daicel 2200) as a thickener to obtain a mixture. The obtained mixture was adjusted to a solid content concentration of 60% with deionized water and was then mixed at 25°C for 60 minutes. Next, the solid content concentration was adjusted to 52% with deionized water, and then a further 15 minutes of mixing was performed at 25°C to yield a mixed liquid. Deionized water and 2.0 parts in terms of solid content of the binder composition for a negative electrode produced as described above were added to the obtained mixed liquid such that the final solid content concentration was adjusted to 48%. After a further 10 minutes of mixing, defoaming was performed under reduced pressure to yield a slurry composition for a negative electrode having good fluidity.

<Formation of negative electrode>

The slurry composition for a negative electrode obtained as described above was applied onto copper foil of 15 $\mu$m in thickness serving as a current collector by a comma coater at a speed of 1.2 m/min such as to have a coating weight after drying of 10.5 mg/cm$^2$. The slurry composition for a negative electrode was dried by conveying the copper foil inside of a 120°C oven for 1 minute and inside of a 130°C oven for 1 minute at a speed of 1.2 m/min. The resultant negative electrode web was rolled by roll pressing to obtain a negative electrode having a negative electrode mixed material layer density of

1.70 g/cm$^3$.

The peel strength of this negative electrode was evaluated. The result is shown in Table 1.

<Formation of positive electrode>

A slurry composition for a positive electrode was obtained by mixing 100 parts of LiCoO$_2$ having a median diameter of 12 μm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent such that the total solid content concentration was 70% and then mixing these materials in a planetary mixer.

The obtained slurry composition for a positive electrode was applied onto aluminum foil of 20 μm in thickness serving as a current collector by a comma coater such as to have a coating weight after drying of 23 mg/cm$^2$. The slurry composition for a positive electrode was dried by conveying the aluminum foil inside of a 60°C oven for 2 minutes at a speed of 0.5 m/min. Thereafter, 2 minutes of heat treatment was performed at 120°C to obtain a positive electrode web. The positive electrode web was rolled by roll pressing to obtain a positive electrode having a positive electrode mixed material layer density of 4.0 g/cm$^3$.

<Preparation of separator>

A separator made of a single layer of polypropylene (produced by Celgard, LLC.; product name: Celgard 2500) was prepared as a separator formed of a separator substrate.

<Production of lithium ion secondary battery>

The post-pressing positive electrode and post-pressing negative electrode that had been produced as described above were arranged with a separator (polypropylene microporous membrane of 20 μm in thickness) interposed therebetween in a configuration of separator/positive electrode/separator/negative electrode to obtain a laminate. Next, the electrode and separator laminate was wound around a core of 20 mm in diameter to obtain a roll including a positive electrode, a separator, and a negative electrode. The obtained roll was then compressed to a thickness of 4.5 mm from one direction at a rate of 10 mm/s to obtain a flattened roll. Note that the obtained flattened roll had an elliptical shape in plan view, and the ratio of the major axis and the minor axis (major axis/minor axis) was 7.7. In addition, a non-aqueous electrolyte solution (LiPF$_6$ solution of 1.0 M in concentration; solvent: mixed solvent of ethylene carbonate (EC)/ethyl methyl carbonate (EMC) = 3/7 (mass ratio) having 2 volume% of vinylene carbonate (VC) further added as an additive) was prepared.

Next, the flattened roll was housed inside of a laminate case made of aluminum together with the non-aqueous electrolyte solution. After connecting a negative electrode lead and a positive electrode lead at specific locations, an opening of the laminate case was sealed by heat to thereby produce a laminate type lithium ion secondary battery as a non-aqueous secondary battery. Note that the obtained lithium ion secondary battery had a pouch shape of 35 mm (width) × 48 mm (height) × 5 mm (thickness) and had a nominal capacity of 700 mAh.

The internal resistance and cycle characteristics of this lithium ion secondary battery were evaluated. The results are shown in Table 1.

(Example 2)

A slurry composition for a negative electrode, a negative electrode, a positive electrode, a separator, and a lithium ion secondary battery were prepared or produced in the same way as in Example 1 with the exception that a binder composition for a negative electrode produced as described below was used. Evaluations were conducted in the same manner as in Example 1. The results are shown in Table 1.

<Production of binder composition for negative electrode>

[First stage of polymerization]

A 5 MPa pressure-resistant vessel equipped with a stirrer was charged with 20.0 parts of styrene as an aromatic vinyl monomer, 73.0 parts of 1,3-butadiene as an aliphatic conjugated diene monomer, 2.0 parts of an alkyl diphenyl ether disulfonic acid salt as an emulsifier, 143.0 parts of deionized water, 0.1 parts of tert-dodecyl mercaptan as a chain transfer agent, and 0.3 parts of potassium persulfate as a polymerization initiator. These materials were thoroughly stirred, were subsequently heated to 55°C to initiate polymerization, and were reacted for 10 hours.

[Second stage of polymerization]

Next, 4.0 parts of styrene as an aromatic vinyl monomer was added to the polymerization system, the temperature was subsequently raised to 65°C, and the reaction was performed for a further 6 hours.

[Third stage of polymerization]

The pressure-resistant vessel was subsequently heated to 85°C, 3.0 parts of methacrylic acid as an acidic functional group-containing monomer was continuously added to the polymerization system over 1 hour, and then the reaction was performed for a further 8 hours. Unreacted monomer was subsequently removed through thermal-vacuum distillation to yield a water dispersion of a particulate binder. The above yielded a water dispersion of a particulate binder having a core-shell particle including a core portion formed of a polymer (A) that had been formed in the first stage of polymerization and a shell portion formed of a polymer (C) that had been formed in the second stage of polymerization, inside of a surface layer portion containing a polymer (B) that had been formed in the third stage of polymerization.

[pH adjustment]

The obtained water dispersion of the particulate binder was neutralized with ammonia water to adjust the pH to 7.0 and thereby obtain a binder composition for a negative electrode.

(Example 3)

A binder composition for a negative electrode, a slurry composition for a negative electrode, a negative electrode, a positive electrode, a separator, and a lithium ion secondary battery were prepared or produced in the same way as in Example 2 with the exception that in production of the binder composition for a negative electrode, the additive amount of styrene in the first stage of polymerization was changed from 20.0 parts to 16.0 parts, and the additive amount of styrene in the second stage of polymerization was changed from 4.0 parts to 8.0 parts. Evaluations were conducted in the same manner as in Example 1. The results are shown in Table 1.

(Example 4)

A slurry composition for a negative electrode, a negative electrode, a positive electrode, a separator, and a lithium ion secondary battery were prepared or produced in the same way as in Example 1 with the exception that a binder composition for a negative electrode produced as described below was used. Evaluations were conducted in the same manner as in Example 1. The results are shown in Table 1.

<Production of binder composition for negative electrode>

[First stage of polymerization]

A 5 MPa pressure-resistant vessel equipped with a stirrer was charged with 20.2 parts of styrene as an aromatic vinyl monomer, 73.0 parts of 1,3-butadiene as an aliphatic conjugated diene monomer, 2.0 parts of an alkyl diphenyl ether disulfonic acid salt as an emulsifier, 143.0 parts of deionized water, 0.1 parts of tert-dodecyl mercaptan as a chain transfer agent, and 0.3 parts of potassium persulfate as a polymerization initiator. These materials were thoroughly stirred, were subsequently heated to 55°C to initiate polymerization, and were reacted for 10 hours.

[Second stage of polymerization]

Next, 2.0 parts of styrene as an aromatic vinyl monomer, 0.9 parts of methyl methacrylate as a (meth)acrylic acid ester monomer, and 0.9 parts of acrylonitrile as a nitrile group-containing monomer were added to the polymerization system, the temperature was subsequently raised to 65°C, and the reaction was performed for a further 6 hours.

[Third stage of polymerization]

The pressure-resistant vessel was subsequently heated to 85°C, 3.0 parts of methacrylic acid as an acidic functional group-containing monomer was continuously added to the polymerization system over 1 hour, and then the reaction was performed for a further 8 hours. Unreacted monomer was subsequently removed through thermal-vacuum distillation to yield a water dispersion of a particulate binder. The above yielded a water dispersion of a particulate binder having a core-shell particle including a core portion formed of a polymer (A) that had been formed in the first stage of polymerization and a shell portion formed of a polymer (C) that had been formed in the second stage of polymerization, inside of a surface layer portion containing a polymer (B) that had been formed in the third stage of polymerization.

[pH adjustment]

The obtained water dispersion of the particulate binder was neutralized with ammonia water to adjust the pH to 7.0 and thereby obtain a binder composition for a negative electrode.

(Example 5)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amount of styrene in the first stage of polymerization was changed from 24.0 parts to 34.0 parts, and the additive amount of 1,3-butadiene in the first stage of polymerization was changed from 73.0 parts to 63.0 parts. Evaluations were conducted in the same manner as in Example 1. The results are shown in Table 1.

(Example 6)

A slurry composition for a negative electrode, a negative electrode, a positive electrode, a separator, and a lithium ion secondary battery were prepared or produced in the same way as in Example 1 with the exception that a binder composition for a negative electrode produced as described below was used. Evaluations were conducted in the same manner as in Example 1. The results are shown in Table 1.

<Production of binder composition for negative electrode>

[First stage of polymerization]

A reactor including a stirrer was charged with 78.8 parts of n-butyl acrylate as a (meth)acrylic acid ester monomer, 1.0 parts of methacrylic acid as an acidic functional group-containing monomer, 1.0 parts of acrylonitrile as a nitrile group-containing monomer, 1.2 parts of N-methylolacrylamide and 1.0 parts of allyl glycidyl ether as cross-linkable monomers, 0.3 parts of an alkyl diphenyl ether disulfonic acid salt as an emulsifier, 0.5 parts of ammonium persulfate as a polymerization initiator, and 300.0 parts of deionized water. These materials were thoroughly stirred, were subsequently heated to 70°C to initiate polymerization, and were reacted for 4 hours.

[Second stage of polymerization]

Next, 14.0 parts of styrene as an aromatic vinyl monomer was added to the polymerization system within an addition time of 1 hour, the temperature was subsequently raised to 80°C, and the reaction was performed for a further 2 hours.

[Third stage of polymerization]

Thereafter, 3.0 parts of methacrylic acid as an acidic functional group-containing monomer was continuously added to the polymerization system over 1 hour, and then the reaction was performed for a further 4 hours. Unreacted monomer was subsequently removed through thermal-vacuum distillation. The above yielded a water dispersion of a particulate binder having a core-shell particle including a core portion formed of a polymer (A) that had been formed in the first stage of polymerization and a shell portion formed of a polymer (C) that had been formed in the second stage of polymerization, inside of a surface layer portion containing a polymer (B) that had been formed in the third stage of polymerization.

[pH adjustment]

The obtained water dispersion of the particulate binder was neutralized with ammonia water to adjust the pH to 8.0 and thereby obtain a binder composition for a negative electrode.

(Example 7)

A binder composition for a negative electrode, a slurry composition for a negative electrode, a negative electrode, a positive electrode, a separator, and a lithium ion secondary battery were prepared or produced in the same way as in Example 6 with the exception that in production of the binder composition for a negative electrode, the additive amount of n-butyl acrylate in the first stage of polymerization was changed from 78.8 parts to 50.0 parts, and the additive amount of styrene in the second stage of polymerization was changed from 14.0 parts to 42.8 parts. Evaluations were conducted in the same manner as in Example 1. The results are shown in Table 1.

(Comparative Example 1)

A slurry composition for a negative electrode, a negative electrode, a positive electrode, a separator, and a lithium ion secondary battery were prepared or produced in the same way as in Example 1 with the exception that a binder composition for a negative electrode produced as described below was used. Evaluations were conducted in the same manner as in Example 1. The results are shown in Table 1.

<Production of binder composition for negative electrode>

A 5 MPa pressure-resistant vessel equipped with a stirrer was charged with 1.0 parts of 2-hydroxyethyl acrylate as a (meth)acrylic acid ester monomer, 3.8 parts of itaconic acid as an acidic functional group-containing monomer, 62.0 parts of styrene as an aromatic vinyl monomer, 33.2 parts of 1,3-butadiene as an aliphatic conjugated diene monomer, 0.4 parts of an alkyl diphenyl ether disulfonic acid salt as an emulsifier, 150.0 parts of deionized water, 0.1 parts of tert-dodecyl mercaptan as a chain transfer agent, and 1.0 parts of potassium persulfate as a polymerization initiator. These materials were thoroughly stirred, were subsequently heated to 55°C to initiate polymerization, and were reacted for 10 hours. Unreacted monomer was subsequently removed through thermal-vacuum distillation to yield a water dispersion of a particulate binder.

[pH adjustment]

The obtained water dispersion of the particulate binder was neutralized with ammonia water to adjust the pH to 8.0 and thereby obtain a binder composition for a negative electrode.

(Comparative Example 2)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the additive amount of 1,3-butadiene in the first stage of polymerization was changed from 73.0 parts to 76.0 parts, and the second stage of polymerization was not performed. Evaluations were conducted in the same manner as in Example 1. The results are shown in Table 2.

(Comparative Example 3)

A binder composition for a negative electrode, a slurry composition for a negative electrode, a negative electrode, a positive electrode, a separator, and a lithium ion secondary battery were prepared or produced in the same way as in Example 1 with the exception that in production of the binder composition for a negative electrode, the addition method of 3.0 parts of methacrylic acid in the second stage of polymerization was changed from continuous addition to addition all at once. Evaluations were conducted in the same manner as in Example 1. The results are shown in Table 2.

In Table 1, shown below:

"BA" indicates n-butyl acrylate;
"MMA" indicates methyl methacrylate;
"β-HEA" indicates 2-hydroxyethyl acrylate;
"MAA" indicates methacrylic acid;
"IA" indicates itaconic acid;
"ST" indicates styrene;
"BD" indicates 1,3-butadiene;
"AN" indicates acrylonitrile;

"NMA" indicates N-methylolacrylamide; and

"AGE" indicates allyl glycidyl ether.

Moreover, "Da/Db" in Table 1 is expressed as a value where the third decimal place has been rounded.

[Table 1]

| | | | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|---|
| Binder composition | Particulate binder | Polymer (A) | (Meth)acrylic acid ester monomer | Type | - | - | - | - | - | BA | BA | β-HEA | - | - |
| | | | | Amount [parts by mass] | - | - | - | - | - | 78.8 | 50.0 | 1.0 | - | - |
| | | | Acidic functional group-containing monomer | Type | - | - | - | - | - | MAA | MAA | IA | - | - |
| | | | | Amount [parts by mass] | - | - | - | - | - | 1.0 | 1.0 | 3.8 | - | - |
| | | | Aromatic vinyl monomer | Type | ST | ST | ST | ST | ST | - | - | ST | ST | ST |
| | | | | Amount [parts by mass] | 24.0 | 20.0 | 16.0 | 20.2 | 34.0 | - | - | 62.0 | 24.0 | 24.0 |
| | | | Aliphatic conjugated diene monomer | Type | BD | BD | BD | BD | BD | - | - | BD | BD | BD |
| | | | | Amount [parts by mass] | 73.0 | 73.0 | 73.0 | 73.0 | 63.0 | - | - | 33.2 | 76.0 | 73.0 |
| | | | Other monomers | Type | - | - | - | - | - | AN | AN | - | - | - |
| | | | | Amount [parts by mass] | - | - | - | - | - | 1.0 | 1.0 | - | - | - |
| | | | | Type | - | - | - | - | - | NMA | NMA | - | - | - |
| | | | | Amount [parts by mass] | - | - | - | - | - | 1.2 | 1.2 | - | - | - |
| | | | | Type | - | - | - | - | - | AGE | AGE | - | - | - |
| | | | | Amount [parts by mass] | - | - | - | - | - | 1.0 | 1.0 | - | - | - |

EP 4 787 462 A1

26

(continued)

|  |  |  |  | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|
| Polymer (C) | Aromatic vinyl monomer | Type | | - | ST | ST | ST | - | ST | ST | - | - | - |
| | | Amount [parts by mass] | | - | 4.0 | 8.0 | 2.0 | - | 14.0 | 42.8 | - | - | - |
| | (Meth)acrylic acid ester monomer | Type | | - | - | - | MMA | - | - | - | - | - | - |
| | | Amount [parts by mass] | | - | - | - | 0.9 | - | - | - | - | - | - |
| | Other monomers | Type | | - | - | - | AN | - | - | - | - | - | - |
| | | Amount [parts by mass] | | - | - | - | 0.9 | - | - | - | - | - | - |
| Polymer (B) | Acidic functional group-containing monomer | Type | | MAA | MAA | MAA | MAA | MAA | MAA | MAA | - | - | MAA |
| | | Amount [parts by mass] | | 3.0 | 3.0 | 3.0 | 3.0 | 3.0 | 3.0 | 3.0 | - | - | 3.0 |
| Total of monomers | | Amount [parts by mass] | | 100 | 100 | 100 | 100.0 | 100 | 100 | 100 | 100 | 100 | 100 |
| Additive amount of emulsifier (per 100 parts by mass of total monomer) | | Amount [parts by mass] | | 2.0 | 2.0 | 2.0 | 2.0 | 2.0 | 0.3 | 0.3 | 0.4 | 2.0 | 2.0 |
| Da [nm] | | | | 220 | 225 | 220 | 190 | 225 | 751 | 730 | 155 | 133 | 180 |
| Db [nm] | | | | 130 | 135 | 130 | 125 | 132 | 432 | 422 | 150 | 130 | 132 |
| Da/Db [-] | | | | 1.69 | 1.67 | 1.69 | 1.52 | 1.70 | 1.74 | 1.73 | 1.03 | 1.02 | 1.36 |
| Amount of THF-insoluble content [mass%] | | | | 95 | 96 | 98 | 97 | 98 | 82 | 89 | 91 | 80 | 75 |
| Proportion of low elasticity region in cross-section of binder film [%] | | | | 77.9 | 49.2 | 18.8 | 38.6 | 11.0 | 84.0 | 53.0 | 0.0 | 100.0 | 87.2 |

(continued)

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| Proportion of high elasticity region in cross-section of binder film [%] | 22.1 | 50.8 | 81.2 | 61.4 | 89.0 | 16.0 | 47.0 | 100.0 | 0.0 | 12.8 |
| Standard deviation of elastic modulus [-] | 4.1 | 6.0 | 12.8 | 13.2 | 17.6 | 6.8 | 22.0 | 40.9 | 0.3 | 3.8 |
| 90th percentile value of elastic modulus [MPa] | 13.1 | 38.2 | 38.3 | 36.3 | 90.0 | 14.6 | 51.0 | 204.6 | 2.0 | 10.8 |
| pH [-] | 7.0 | 7.0 | 7.0 | 7.0 | 7.0 | 8.0 | 8.0 | 8.0 | 7.0 | 7.0 |
| Evaluation — Peel strength | B | A | A | A | B | A | B | D | D | C |
| Evaluation — Internal resistance | B | A | A | A | B | B | B | C | C | C |
| Evaluation — Cycle characteristics | B | B | B | A | B | C | C | C | C | C |
| Evaluation — Tackiness | B | B | A | A | A | B | A | A | D | C |

It can be seen from Table 1 that an electrode having excellent peel strength could be produced in Examples 1 to 7 in which a binder composition that contained a particulate binder and water and with which the proportion constituted by a low elasticity region in a cross-section of a binder film was within a specific range was used.

In contrast, it can be seen that peel strength of an electrode decreased compared to Examples 1 to 7 in Comparative Examples 1 to 3 in which a binder composition with which the proportion constituted by a low elasticity region in a cross-section of a binder film was outside of the specific range was used.

INDUSTRIAL APPLICABILITY

According to the present disclosure, it is possible to provide a binder composition for a non-aqueous secondary battery electrode that is capable of forming an electrode for a non-aqueous secondary battery having excellent peel strength and a slurry composition for a non-aqueous secondary battery electrode that contains this binder composition.

Moreover, according to the present disclosure, it is possible to provide an electrode for a non-aqueous secondary battery that has excellent peel strength and a non-aqueous secondary battery that includes this electrode for a non-aqueous secondary battery.

**Claims**

1.  A binder composition for a non-aqueous secondary battery electrode comprising a particulate binder and water, wherein in a situation in which an elastic modulus in a cross-section of a binder film produced using the binder composition for a non-aqueous secondary battery electrode is measured using an atomic force microscope, a proportion constituted by a low elasticity region where the elastic modulus is less than 10 MPa is not less than 10% and not more than 86%.

2.  The binder composition for a non-aqueous secondary battery electrode according to claim 1, wherein the elastic modulus has a standard deviation of not less than 5.0 and not more than 20.0.

3.  The binder composition for a non-aqueous secondary battery electrode according to claim 1, wherein the elastic modulus has a 90th percentile value of not less than 20 MPa and not more than 100 MPa.

4.  The binder composition for a non-aqueous secondary battery electrode according to claim 1, wherein a ratio Da/Db of an average particle diameter Da of the particulate binder measured by dynamic light scattering and an average particle diameter Db of the particulate binder measured by laser diffraction/scattering is not less than 1.05 and not more than 4.00.

5.  The binder composition for a non-aqueous secondary battery electrode according to claim 1, wherein an average particle diameter Db of the particulate binder measured by laser diffraction/scattering is not less than 100 nm and not more than 400 nm.

6.  The binder composition for a non-aqueous secondary battery electrode according to claim 1, wherein the particulate binder includes a polymer (A) including either or both of an aliphatic conjugated diene monomer unit and a (meth) acrylic acid ester monomer unit.

7.  The binder composition for a non-aqueous secondary battery electrode according to claim 1, wherein the binder composition for a non-aqueous secondary battery electrode has a pH of not lower than 6.0 and not higher than 10.0.

8.  The binder composition for a non-aqueous secondary battery electrode according to claim 1, wherein an amount of tetrahydrofuran-insoluble content in the particulate binder is 70 mass% or more.

9.  A slurry composition for a non-aqueous secondary battery electrode comprising: an electrode active material; and the binder composition for a non-aqueous secondary battery electrode according to any one of claims 1 to 8.

10. An electrode for a non-aqueous secondary battery comprising an electrode mixed material layer formed using the slurry composition for a non-aqueous secondary battery electrode according to claim 9.

11. A non-aqueous secondary battery comprising a positive electrode, a negative electrode, a separator, and an electrolyte solution, wherein at least one of the positive electrode and the negative electrode is the electrode for a non-aqueous secondary battery according to claim 10.

## INTERNATIONAL SEARCH REPORT

| International application No. |
|---|
| **PCT/JP2024/034512** |

### A. CLASSIFICATION OF SUBJECT MATTER

*H01M 4/139*(2010.01)i; *H01M 4/13*(2010.01)i; *H01M 4/62*(2006.01)i; *H01M 10/052*(2010.01)i; *H01M 10/0566*(2010.01)i
FI:   H01M4/139; H01M4/62 Z; H01M4/13; H01M10/0566; H01M10/052

According to International Patent Classification (IPC) or to both national classification and IPC

### B. FIELDS SEARCHED

Minimum documentation searched (classification system followed by classification symbols)

H01M4/139; H01M4/13; H01M4/62; H01M10/052; H01M10/0566

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2023/008582 A1 (ZEON CORPORATION) 02 February 2023 (2023-02-02) paragraphs [0007], [0043]-[0046], examples | 1-11 |
| A | WO 2020/246222 A1 (ZEON CORPORATION) 10 December 2020 (2020-12-10) entire text, all drawings | 1-11 |
| P, A | WO 2024/024574 A1 (ZEON CORPORATION) 01 February 2024 (2024-02-01) claims | 1-11 |

☐ Further documents are listed in the continuation of Box C.          ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

| | International application No. |
|---|---|
| | **PCT/JP2024/034512** |

| Patent document cited in search report | | | Publication date (day/month/year) | Patent family member(s) | | | Publication date (day/month/year) |
|---|---|---|---|---|---|---|---|
| WO | 2023/008582 | A1 | 02 February 2023 | EP paragraphs [0010], [0089]-[0095], examples | 4379869 | A1 | |
| | | | | CN | 117693836 | A | |
| | | | | KR 10-2024-0037234 | | A | |
| WO | 2020/246222 | A1 | 10 December 2020 | US entire text, all drawings | 2022/0223875 | A1 | |
| | | | | EP | 3981812 | A1 | |
| | | | | CN | 113874412 | A | |
| | | | | KR 10-2022-0016825 | | A | |
| WO | 2024/024574 | A1 | 01 February 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6645430 B
- JP 6627763 B
- JP 5701519 B
- WO 2010114119 A1
- JP 2012204303 A